# EUROPEAN PATENT SPECIFICATION

(11) **EP 4 237 609 B1**
(45) Date of publication and mention of the grant of the patent: **07.08.2024**
(21) Application number: 21806577.9
(22) Date of filing: 20.10.2021
(51) Int. Cl.: D04H 1/4274, A41D 31/14, B29B 17/00, B32B 5/02, B32B 5/26, D04H 1/435, D04H 1/46, D04H 1/74

(54) **SUSTAINABLE NONWOVEN TEXTILE**
NACHHALTIGER VLIESSTOFF
TEXTILE NON-TISSÉ DURABLE

(30) Priority: 30.10.2020 US 202063108203 P; 15.12.2020 US 202063125797 P
(43) Date of publication of application: 06.09.2023
(60) Divisional application: 24171172.0
(73) Proprietor: NIKE Innovate C.V., Beaverton, Oregon 97005 (US)
(72) Inventor: LUND, Dallas, Beaverton, Oregon 97005 (US); SKORUPSKI, Derek, Beaverton, Oregon 97005 (US); TURNER, David, Beaverton, Oregon 97005 (US)
(74) Representative: Müller-Boré & Partner Patentanwälte PartG mbB
(86) International application number: PCT/US2021/055838
(87) International publication number: WO 2022/093596

(56) References cited:
- WO-A1-2019/101003
- WO-A1-96/06222
- CN-A- 103 194 859
- CN-A- 111 058 190
- US-A1- 2003 077 969

## Description

### FIELD OF THE INVENTION

Aspects of this disclosure are directed to a sustainable nonwoven article of apparel and sustainable methods for producing the same.

### BACKGROUND OF THE INVENTION

Various conventional textiles exist that are intended to provide insulation, such as for an article of apparel. However, these conventional textiles (e.g., conventional fleece) are often manufactured using some processes (e.g., knitting, weaving, etc.) that are less sustainable and/or that consume more energy than other textile-manufacturing processes. Furthermore, the structure of conventional textiles is typically not conducive to incorporating fibers derived from varied categories of recyclable and/or recycled goods, which may limit sustainability.

While some conventional fiber-entanglement processes, such as for nonwoven textiles, may consume less energy than other processes (e.g., knitting, weaving, braiding, etc.), the nonwoven textiles generated by these processes are generally not suitable to construct articles of apparel. For example, conventional nonwoven textiles often lack stretch and recovery properties, are too heavy, lack drapability, have a rough hand, and, in some instances where increased insulation is desired, lack insulative properties. Moreover, even where, despite the unsuitability, conventional nonwoven textiles are used to construct articles of apparel, the processes to manufacture these conventional nonwoven textiles are not sustainable in one or more respects and/or still consume a relatively high amount of energy.

WO 2019/101003 A1 describes a filler comprising short fiber cotton formed from core fiber and sheath fiber, the core fiber being composed of a low melting point fiber and a high melting point fiber, the low melting point fiber melting to cause fixation of the core fiber and the sheath fiber, the average length of the core fiber being 1-10 cm and the standard deviation of the length being 0-1.6, and the bulkiness of the short fiber cotton being 200-800 inch3/30 g.

CN 111 058 190 A describes a composite packaging material and a preparation method thereof. The raw materials of the packaging material comprise waste spinning fibers and bonding fibers, and the mass ratio of the waste spinning fibers to the bonding fibers is 80: 20 to 60: 40.

CN 103 194 859 A describes a preparation method for high-performance uniform leather base cloth. The preparation method comprises a first step of preparing a non-woven cloth layer; a second step of compositing the prepared non-woven cloth layer and a woven cloth layer; and a third step of performing reinforcement and hot rolling treatment, wherein in the first step, 70-100wt% of regenerated polyester fibers and 0-30wt% of chemical fiber polyester staple fibers serve as raw materials and undergo mixed opening, carding, lapping, primary needling and secondary needling to form the non-woven cloth layer, the linear density of the regenerated polyester fibers is 1.5-4D, the fiber length of the regenerated polyester fibers is 38-76mm, the linear density of the chemical fiber polyester staple fibers is 1.4-3D, and the fiber length of the chemical fiber polyester staple fibers is 38-51mm; and in the second step, the woven cloth layer is selected, is compositely connected with the non-woven cloth layer prepared in the first step through a needling process and is made of polyester yarn, the warp density of the woven cloth layer is 65-85 pieces/in, and the weft density of the woven cloth layer is 35-50 pieces/in.

### SUMMARY OF THE INVENTION

Aspects of the present disclosure relate to a nonwoven textile that is sustainable and that is sustainably manufactured. This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter. The claimed invention is set out in the independent claims. Further developments of the claimed invention are the subject matter of the dependent claims.

### BRIEF DESCRIPTION OF THE DRAWING

Example aspects of the subject matter of this disclosure are described in detail in the Detailed Description with reference to the figures briefly described directly below, which are incorporated herein by reference. These figures are submitted together with this disclosure.
FIG. 1 illustrates a system for sustainably producing nonwoven articles, in accordance with an aspect of the present disclosure.
FIG. 2 illustrates some additional details of parts of the system in FIG. 1, including sustainable raw material generation, in accordance with an aspect of the present disclosure.
FIG. 3 illustrates some additional details of parts of the system in FIG. 1, including sustainable manufacturing processes, in accordance with an aspect of the present disclosure.
FIG. 4 illustrates a first fiber web, in accordance with an aspect of the present disclosure.
FIG. 5 illustrates a second fiber web, in accordance with an aspect of the present disclosure.
FIG. 6 illustrates a third fiber web, in accordance with an aspect of the present disclosure.
FIG. 7 illustrates an elastomeric layer, in accordance with an aspect of the present disclosure.
FIG. 8 includes a table with example carbon footprint data for a nonwoven textile, in accordance with an aspect of the present disclosure.
FIG. 9 illustrates some aspects of a sustainable article, in accordance with an aspect of the present disclosure.
FIG. 10 illustrates a timeline of a sustainable system, in accordance with an aspect of the present disclosure.

### DETAILED DESCRIPTION OF THE INVENTION

The subject matter of the present invention is described with specificity herein to meet statutory requirements. However, the description itself is not intended to limit the scope of this disclosure. Moreover, although the terms "step" and/or "block" might be used herein to connote different elements of methods employed, the terms should not be interpreted as implying any particular order among or between various steps herein disclosed unless and except when the order of individual steps is explicitly stated.

Various conventional textiles exist that are intended to provide insulation, such as for an article of apparel. However, these conventional textiles (e.g., conventional fleece) are often manufactured using some processes (e.g., knitting, weaving, etc.) that are less sustainable and/or that consume more energy than other textile-manufacturing processes. Furthermore, the structure of conventional textiles is typically not conducive to incorporating fibers derived from varied categories of recyclable and/or recycled goods, which may limit sustainability.

While some conventional fiber-entanglement processes, such as for nonwoven textiles, may consume less energy than other processes (e.g., knitting, weaving, braiding, etc.), the nonwoven textiles generated by these processes are generally not suitable to construct articles of apparel. For example, conventional nonwoven textiles often lack stretch and recovery properties, are too heavy, lack drapability, have a rough hand, and, in some instances where increased insulation is desired, lack insulative properties. Moreover, even where, despite the unsuitability, conventional nonwoven textiles are used to construct articles of apparel, the processes to manufacture these conventional nonwoven textiles are not sustainable in one or more respects and/or still consume a relatively high amount of energy.

Aspects of this disclosure are directed to a recyclable, nonwoven textile suitable for use in apparel and other articles. The nonwoven textile includes a first face substantially formed or formed, at least in part, from a first entangled web of fibers and an opposite second face substantially which may be formed or formed, at least in part, from a second entangled web of fibers. As used herein, the term "substantially" means from about 51% to about 100%. When formed into an article of apparel, the first face forms an outer-facing surface of the article of apparel, and the second face forms an inner-facing surface of the article of apparel. In some aspects, the nonwoven textile also includes an elastomeric layer positioned between the first and second entangled webs of fibers. The elastomeric layer imparts stretch and recovery properties to the composite nonwoven textile making it suitable for use in articles of apparel such as upper-body garments and lower-body garments. In some aspects, the nonwoven textile may also include additional entangled webs (e.g., a third entangled web of fibers, a fourth entangled web of fibers, etc.) layered together with the elastomeric layer. Properties of the different webs and/or the number of webs used to form the nonwoven textile may be adjusted to achieve different desired end properties for the nonwoven textile including different desired end properties for each of the faces of the composite nonwoven textile.

In general, the nonwoven textile disclosed herein, in contrast to conventional nonwoven textiles, is sustainable and/or is sustainably produced. For example, in one aspect of the present disclosure, the nonwoven textile incorporates fibers from disparate recycled-fiber sources, which provides additional utilization options for various end-of-life articles. In contrast, conventional textiles and systems may limit the sources from which recycled fibers are accepted and fail to provide non-landfill disposal options for various types of goods. In a further aspect, the present disclosure includes a perpetual system (e.g., nearly perpetual) that uses a raw material (e.g., the polymer material) to produce an article and that repeatedly reuses that same raw material (e.g., the same polymer material) to produce subsequent generations of articles. Among other things, these aspects contribute to sustainability by using and reusing materials that may otherwise be discarded in a landfill.

Other aspects of the present disclosure relate to a nonwoven textile including one or more properties that increase usability for constructing an article of apparel. For example, in one aspect of the present disclosure, the nonwoven textile may incorporate recycled fibers; be relatively lightweight; and have good thermal properties, stretch and recovery, drape, resistance to abrasion, and a soft hand, making the nonwoven textile usable for forming articles of apparel suitable for use in various conditions (e.g., cool weather conditions; or when heat-retention is desired; or in other conditions). In addition, the properties of the nonwoven textile may enable use for constructing relatively large percentages by weight of articles of apparel. In this respect, the nonwoven textile may replace at least some conventional textiles, which are often less sustainable and/or consume higher amounts of energy during production. As such, sustainability is improved by constructing articles from higher percentages by weight of the nonwoven textile, which consumes lower amounts of energy during production. Moreover, in an aspect of the present disclosure, the nonwoven textile, which is suitable for use in articles of apparel and other articles, includes a relatively low carbon footprint.

Additional aspects include a sustainable nonwoven textile that is constructed with shredded-article fibers. In some instances, elements of the sustainable nonwoven textile (e.g., the entanglement structure of the fibers) may leverage properties of the shredded-article fibers to achieve desirable properties in the nonwoven textile. In other instances, the elements of the sustainable nonwoven textile may minimize the effect of potentially less desired properties of the shredded-article fibers on the overall nonwoven textile. Often, shredded-article fibers may be derived without pelletizing and extrusion through processes that consume less energy, and as such, nonwoven textiles that incorporate shredded-article fibers may have a lower carbon footprint.

In another aspect of the present disclosure, a nonwoven textile is constructed of one or more materials that are recyclable, and in some aspects, the nonwoven textile may be fully recyclable. For example, fibers selected to form the entangled webs may include recycled materials including recycled polyethylene terephthalate (PET) fibers, commonly known as polyester fibers. Additionally, materials selected to form the elastomeric layer may also be fully recyclable. Use of recycled fibers and materials reduces the carbon footprint of the composite nonwoven textile.

As used herein, the term "article of apparel" is intended to encompass articles worn by a wearer. As such, they may include upper-body garments (e.g., tops, t-shirts, pullovers, hoodies, jackets, coats, and the like), and lower-body garments (e.g., pants, shorts, tights, capris, unitards, and the like). Articles of apparel may also include hats, gloves, sleeves (e.g., arm sleeves, calf sleeves, etc.), articles of footwear (e.g., uppers for shoes), and the like. The term "inner-facing surface" when referring to the article of apparel means the surface or face that is configured to face towards a body surface of a wearer when the article of apparel is worn in an intended manner, and the term "outer-facing surface" means the surface or face that is configured to face away from the body surface of the wearer and toward an external environment when the article of apparel is worn in an intended manner. The term "innermost-facing surface" means the surface or face closest to the body surface of the wearer with respect to other layers of the article of apparel, and the term "outermost-facing surface" means the surface or face that is positioned farthest away from the body surface of the wearer with respect to the other layers of the article of apparel.

As used herein, the term "nonwoven textile" refers to fibers that are held together by mechanical and/or chemical interactions without being in the form of a knit, woven, braided, or other structured construction. The term "nonwoven articles" refers to articles, such as finished goods, roll goods, manufacturing by-products, and the like that are constructed of one or more nonwoven textiles. A nonwoven article may be constructed of a single nonwoven textile, multiple nonwoven textiles, or a nonwoven textile combined with other textiles (e.g., knit, woven, braided, etc.) or materials. In a particular aspect, the nonwoven textile includes a collection of fibers that are mechanically manipulated to form a mat-like material. Stated differently, nonwoven textiles are directly made from fibers. The nonwoven textile may include different layers formed into a cohesive structure, where the different layers may have a different or similar composition of fibers. The term "web of fibers" or "fiber web" refers to a layer prior to undergoing a mechanical entanglement process with one or more other fiber layers. The web of fibers includes fibers that have undergone a carding and lapping process that generally aligns the fibers in one or more common directions that extend along an x, y plane. The web of fibers may also undergo a light needling process or mechanical entanglement process that entangles the fibers of the layer to a degree such that the web of fibers forms a cohesive structure that can be manipulated (e.g., rolled on to a roller, pulled from the roller, stacked, and the like). The term "entangled web of fibers" or "entangled fiber web" when referring to one of the fiber layers refers to the layer after it has undergone mechanical entanglement with one or more other layers. As such, a layer of entangled fibers may include fibers originally present in the web of fibers forming the layer as well as fibers that are present in other layers that have been moved through the entanglement process into the layer of entangled fibers.

The mechanical entanglement process contemplated herein for producing a nonwoven textile may include needle entanglement (commonly known as needlepunching) using barbed or structured needles, or fluid entanglement. In aspects contemplated herein, needlepunching may be used based on the small denier of the fibers being used and the ability to fine tune different parameters associated with the needlepunching process. Needlepunching generally uses barbed or spiked needles to reposition a percentage of fibers from a generally horizontal orientation (an orientation extending along an x, y plane) to a generally vertical orientation (a z-direction orientation). Referring to the needlepunching process in general, the carded, lapped, and pre-needled webs may be stacked with other carded, lapped, and pre-needled webs and passed between a bed plate and a stripper plate positioned on opposing sides of the stacked web configuration. Barbed needles, which are fixed to a needle board, pass in and out through the stacked web configuration, and a stripper plate strips the fibers from the needles after the needles have passed through the stacked web configuration. The distance between the stripper plate and the bed plate may be adjusted to control web compression during needling. The needle board repeatedly engages and disengages from the stacked web configuration as the stacked web configuration is moved in a machine direction or material flow direction along a conveyance system such that the length of the stacked web configuration is needled. Aspects herein contemplate using multiple needle boards sequentially positioned at different points along the conveyance system where different needle boards may engage the stacked web configuration from different faces of the stacked web configuration (e.g., an upper face and a lower face with respect to the conveyance system) as the stacked web configuration moves in the machine direction. Each engagement of a needle board with the stacked web configuration is known herein as a "pass." Parameters associated with particular needle boards may be adjusted to achieve desired properties of the resulting needled nonwoven textile (e.g., basis weight, thickness, and the like). The different parameters may include stitch density (SD) which is the number of needles per cm² used during an entanglement pass and penetration depth (PD) which is how far the needle passes through the stacked web configuration before being pulled out of the stacked web configuration. Parameters associated with the needlepunching process in general may also be adjusted such as the spacing between the bed plate and the stripper plate and the speed of conveyance of the stacked web configuration.

Aspects herein contemplate using a five-barbed needle (a needle having five barbs arranged along a length of the needle) although other needle types are contemplated herein. The barbs on the needle "capture" fibers as the barb moves from a first face to an opposing second face of the stacked web configuration, or vice versa. The movement of the needle through the stacked web configuration effectively moves or pushes fibers captured by the barbs from a location near or at the first face to a location near or at the second face and further causes physical interactions with other fibers helping to "lock" the moved fibers into place. In example aspects, the number of barbs on the needle that interact with fibers may be based on the penetration depth of the needle. For example, all five barbs may interact with fibers when the penetration depth is a first amount, and fewer than all five barbs (e.g., four barbs, three barbs, two barbs, one barb) may interact with fibers as the penetration depth decreases. In further example aspects, the size of the barb may be adjusted based on the denier of fibers used in the web(s). For example, the barb size may be selected so as to engage with small denier (e.g. fine) fibers but not with large denier fibers so as to cause selective movement of the small denier fibers but not the large denier fibers. In another example, the barb size may be selected so as to engage with both small denier and large denier fibers so as to cause movements of both fibers through the webs.

After entanglement, the nonwoven textile may include a first face and an opposite second face which both face outward with respect to an interior of the nonwoven textile and comprise the outermost faces of the nonwoven textile. As such, when viewing the nonwoven textile, the first face and the second face are each fully visible. The first face and the second face may both extend along x, y planes that are generally parallel and offset from each other. For instance, the first face may be oriented in a first x, y plane and the second face may be oriented in a second x, y plane generally parallel to and offset from the first x, y plane.

The term "elastomeric layer" as used herein refers to a layer that has stretch and recovery properties (e.g., is elastically resilient) in at least one orientational axis, which includes both a layer having stretch and recovery in a single orientational axis and a layer having stretch and recovery in multiple orientational axes. Examples of an orientational axis include a length direction, a width direction, an x-direction, a y-direction, and any direction angularly offset from a length direction, a width direction, an x-direction, and a y-direction. The elastomeric layer may be formed from thermoplastic elastomers such as thermoplastic polyurethane (TPU), thermoplastic polyether ester elastomer (TPEE), combinations of TPU and TPEE and the like. The elastomeric layer may comprise a spunbond layer, a meltblown layer, a film, a web, and the like. The elastomeric layer may be a recycled TPEE (rTPEE).

When referring to fibers, the term denier or denier per fiber is a unit of measure for the linear mass density of the fiber and more particularly, it is the mass in grams per 9000 meters of the fiber. In one example aspect, the denier of a fiber may be measured using ASTM D1577-07. The dtex of a fiber is the mass of an individual fiber in grams per 10,000 meter of fiber length. The diameter of a fiber may be calculated based on the fiber's denier and/or the fiber's dtex. For instance, the fiber diameter, d, in millimeters may be calculated using the formula: d = square root of dtex divided by 100. When referring to the percentage by weight of fibers in a textile, the percentage by weight is based on the fibers without any coatings or additional additives including films.

Fibers contemplated herein may be formed of a number of different materials including polyethylene terephthalate (PET) commonly known as polyester. The PET fibers may include virgin PET fibers (fibers that have not been recycled), and recycled PET fibers. Recycled PET fibers include "shredded-article fibers" and "re-pelletized-polymer fibers." As used herein, shredded-article fibers include fibers that are direct by-products of shredding a fiber-containing article (e.g., knit, woven, nonwoven, etc.), and re-pelletized-polymer fibers include fibers that are extruded from pelletized or chipped by-products derived from polymer-containing sources (e.g., PET bottles or containers; PET-fiber articles that are knit, woven, nonwoven; roll goods; textile manufacturing scrap; etc.).

The term "silicone-coated fiber" as used herein may mean a fiber having a continuous silicone coating such that the silicone coating completely covers the fiber along its length. In one example, the fiber may form a core and the silicone may form a sheath surrounding the core. In other example aspects, the term "silicone-coated fiber" may mean a fiber that has an intermittent coating of silicone in at least some areas along the length of the fiber. For instance, the fiber may be sprayed with a silicone coating. In this aspect, if a particular web of fibers includes 100% by weight of silicone-coated fibers, it is contemplated herein that the fibers that form the web may have areas that do not include the silicone coating. It is contemplated herein that the silicone-coated fibers are incorporated into the webs of fibers that form the composite nonwoven textile. Stated differently, the silicone coating on the fibers is not applied to the fibers after the composite nonwoven textile is formed using, for example, a silicone spray finish.

The term "color" or "color property" as used herein when referring to the nonwoven textile generally refers to an observable color of fibers that form the textile. Such aspects contemplate that a color may be any color that may be afforded to fibers using dyes, pigments, and/or colorants that are known in the art. As such, fibers may be configured to have a color including, but not limited to red, orange, yellow, green, blue, indigo, violet, white, black, and shades thereof. In one example aspect, the color may be imparted to the fiber when the fiber is formed (commonly known as dope dyeing). In dope dyeing, the color is added to the fiber as it is being extruded such that the color is integral to the fiber and is not added to the fiber in a post-formation step.

Aspects related to a color further contemplate determining if one color is different from another color. In these aspects, a color may comprise a numerical color value, which may be determined by using instruments that objectively measure and/or calculate color values of a color of an object by standardizing and/or quantifying factors that may affect a perception of a color. Such instruments include, but are not limited to spectroradiometers, spectrophotometers, and the like. Thus, aspects herein contemplate that a "color" of a textile provided by fibers may comprise a numerical color value that is measured and/or calculated using spectroradiometers and/or spectrophotometers. Moreover, numerical color values may be associated with a color space or color model, which is a specific organization of colors that provides color representations for numerical color values, and thus, each numerical color value corresponds to a singular color represented in the color space or color model.

In these aspects, a color may be determined to be different from another color if a numerical color value of each color differs. Such a determination may be made by measuring and/or calculating a numerical color value of, for instance, a first textile having a first color with a spectroradiometer or a spectrophotometer, measuring and/or calculating a numerical color value of a second textile having a second color with the same instrument (i.e., if a spectrophotometer was used to measure the numerical color value of the first color, then a spectrophotometer is used to measure the numerical color value of the second color), and comparing the numerical color value of the first color with the numerical color value of the second color. In another example, the determination may be made by measuring and/or calculating a numerical color value of a first area of a textile with a spectroradiometer or a spectrophotometer, measuring and/or calculating a numerical color value of a second area of the textile having a second color with the same instrument, and comparing the numerical color value of the first color with the numerical color value of the second color. If the numerical color values are not equal, then the first color or the first color property is different than the second color or the second color property, and vice versa.

Further, it is also contemplated that a visual distinction between two colors may correlate with a percentage difference between the numerical color values of the first color and the second color, and the visual distinction will be greater as the percentage difference between the color values increases. Moreover, a visual distinction may be based on a comparison between colors representations of the color values in a color space or model. For instance, when a first color has a numerical color value that corresponds to a represented color that is black or navy and a second color has a numerical color value that corresponds to a represented color that is red or yellow, a visual distinction between the first color and the second color is greater than a visual distinction between a first color with a represented color that is red and a second color with a represented color that is yellow.

The term "pill" or "pilling" as used herein refers to the formation of small balls of fibers or fibers ends on a facing side of the nonwoven textile. The pill may extend away from a surface plane of the textile. Pills are generally formed during normal wash and wear due to forces (e.g., abrasion forces) that cause the fiber ends to migrate through the face of the nonwoven textile and entangle with other fiber ends. A textile's resistance to pilling may be measured using standardized tests such as Random Tumble and Martindale Pilling tests.

Various measurements are provided herein with respect to the pre-entangled webs and the resulting composite nonwoven textile. A thickness of the resulting composite nonwoven may be measured using a precision thickness gauge. To measure thickness, for example, the textile may be positioned on a flat anvil and a pressure foot is pressed on to it from the upper surface under a standard fixed load. A dial indicator on the precision thickness gauge gives an indication of the thickness in millimeters (mm). Basis weight is measured using ISO3801 testing standard and has the units grams per square meter (gsm). Textile stiffness, which generally corresponds to drape is measured using ASTMD4032 (2008) testing standard and has the units kilogram force (Kgf). Fabric growth and recovery is measured using ASTM2594 testing standard and is expressed as a percentage. The term "stretch" as used herein means a textile characteristic measured as an increase of a specified distance under a prescribed tension and is generally expressed as a percentage of the original benchmark distance (i.e., the resting length or width). The term "growth" as used herein means an increase in distance of a specified benchmark (i.e., the resting length or width) after extension to a prescribed tension for a time interval followed by the release of tension and is usually expressed as a percentage of the original benchmark distance. "Recovery" as used herein means the ability of a textile to return to its original benchmark distance (i.e., its resting length or width) and is expressed as a percentage of the original benchmark distance. Thermal resistance, which generally corresponds to insulation features, is measured using ISO11092 testing standard and has the units of RCT (M² * K/W).

Carbon footprint and other measurements related to sustainability of a nonwoven textile (e.g., associated with a process for manufacturing a nonwoven textile) are based on the Higg Index when relevant data is available. If data is not provided under the Higg Index for a process used to manufacture a nonwoven textile, then carbon footprint attributable to that process is determined based on a "kg CO2e manual assessment" by manufacturing 6,000 meters of textile (60gsm, 1.65 meters wide) in order to calculate the mass (kg) of material. Energy consumed at the manufacturing stages (kwh) is measured and used to calculate KWH/kg. The KWH/kg value is multiplied by the Carbon Energy Grid Emission Factor (for the relevant location assigned by the International Energy Agency) to determine the kg CO2e value.

Unless otherwise noted, all measurements provided herein are measured at standard ambient temperature and pressure (25 degrees Celsius or 298.15 K and 1 bar).

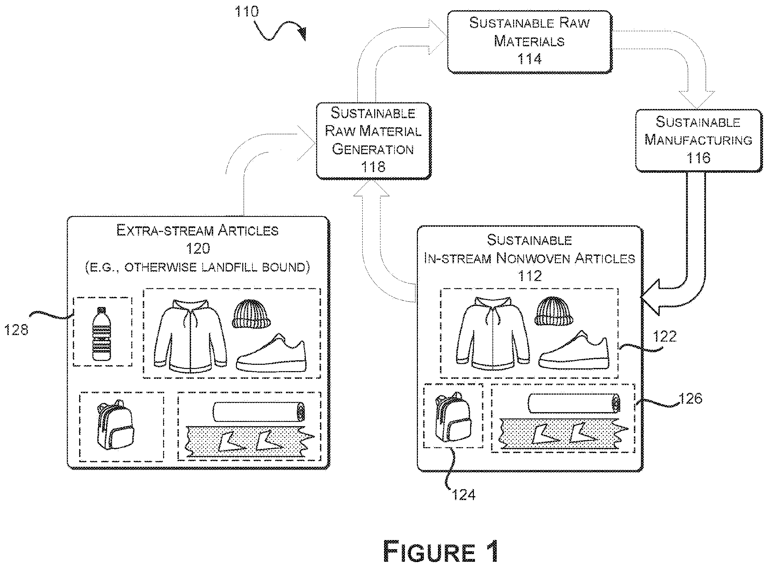

FIG. 1 illustrates a high-level schematic of a sustainable system 110 for the production and recycling of nonwoven articles 112. As used herein, nonwoven articles 112 may include finished goods, roll goods, manufacturing by-products, and other such items. The system 110 includes sustainable raw materials 114 (e.g., textile fibers), which are used by a sustainable manufacturing process 116 (e.g., processes and equipment), to produce the nonwoven articles 112. In addition, the system 110 includes a sustainable raw-material generation process 118, which recycles the nonwoven articles 112, as well as external articles 120, to produce raw materials 114 for manufacturing subsequent articles.

In an aspect of the present disclosure, the system 110 reuses recyclable goods from a variety of different categories to generate raw materials for future products. For example, the system 110 recycles the "in-stream" nonwoven articles 112 that are manufactured by the system 110. In addition, the in-stream nonwoven articles 112 may include a variety of different categories of recyclable goods, such as articles of apparel 122; gear, equipment, and bags 124; and roll goods 126 (e.g., deadstock, excess, prior-season styles, scrap, etc.). Moreover, the system 110 recycles external or "extra-stream" articles 120 that are not produced by the manufacturing process 116 and that are still usable or absorbable by the system 110 to generate raw materials. In this sense, extra-stream articles 120 represent another different, disparate category of recyclable goods, and the extra-stream articles 120 may include at least some recyclable good categories similar to the in-stream articles 112, as well as recyclable good categories that differ (e.g., plastic bottles 128). By using a variety of different categories of recyclable goods, aspects of the present disclosure provide additional utilization options for various end-of-life articles by using and reusing materials that may otherwise be discarded in a landfill.

In some aspects, the system 110 may utilize new virgin materials (e.g., virgin PET not depicted) to make at least portions of some articles. These materials may be integrated into the system 110 and are reused in subsequent articles where possible. In other aspects, the system 110 may limit the use of materials or components that do not utilize sustainable raw material generation process 118 or are not reusable in some other role. For example, some types of fasteners may be used to construct the articles 112, in which case, the fasteners may be removed from end-of-life articles and reused in subsequent articles when possible.

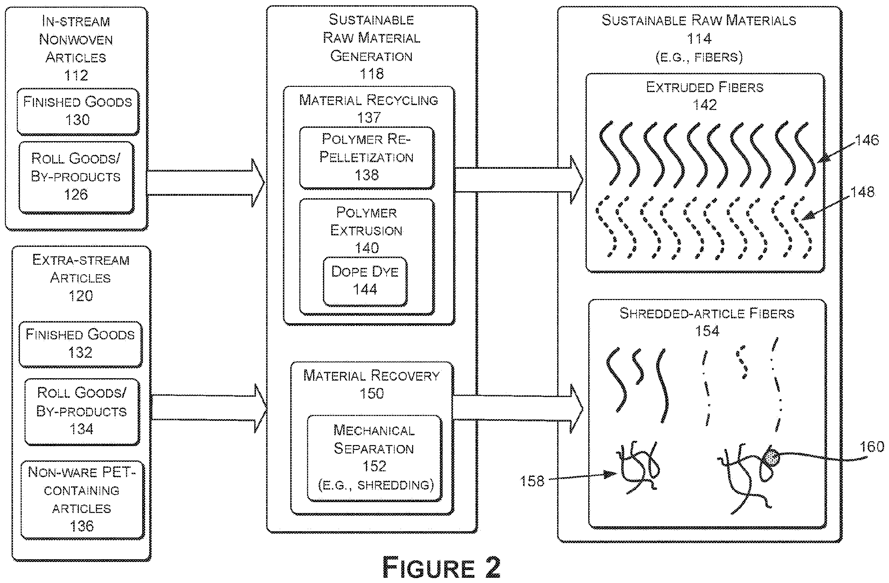

FIG. 2 illustrates some aspects of the sustainable raw-material generation process 118 depicted in FIG. 1. In general, in-stream nonwoven articles 112 and extra-stream articles 120 are provided as inputs to the sustainable raw material generation process 118. In some aspects, the in-stream nonwoven articles 112 may include finished goods 130 (e.g. articles of apparel 122, bags 124, etc.) and/or roll goods and/or their manufacturing by-products of making roll goods 126 that are manufactured by the sustainable manufacturing process 116. Extra-stream articles 120 may include finished goods, roll goods, and manufacturing by-products that are manufactured outside of the sustainable manufacturing system. As used herein, the term "finished goods" may include articles of apparel, equipment such as bags, and other such items. As used herein, the term "roll goods and their manufacturing by-products" may include, for example, unused rolls of textile, scraps cut from rolls, by-products of the manufacturing process, and the like, that are manufactured by the sustainable manufacturing process 116.

The in-stream nonwoven articles 112 may be acquired in various manners. For example, consumers of the in-stream nonwoven articles 112 may return the articles for incorporation back into the system 110. In some instances, consumers may return articles for credit, articles that are at their respective end-of-life, etc. In addition, retailers and/or manufacturers may actively solicit in-stream nonwoven articles 112 through collection programs, drops offs, incentive programs, etc. In some instances, textile manufacturers may return unused rolls (e.g., extra, overstock, deadstock, prior season, etc.). Manufacturers may also actively collect by-products produced throughout the sustainable manufacturing process for input back into the system.

Even though the extra-stream articles 120 are not made by the sustainable manufacturing process 116, they are still usable in the sustainable raw-material generation process 118. At least some of the extra-stream articles 120 may be acquired in manners that are similar to those described above for the in-stream nonwoven articles 112. For example, in some aspects, the manufacturer and/or retailer of the extra-stream article 120 may be different from the manufacturer and/or retailer of the in-stream nonwoven articles 112. However, the extra-stream article 120 may still be usable as an input for the sustainable raw material generation process 118. In some aspects, one or more of the extra-stream articles 120 may include a category of recyclable goods that is different from the category of in-stream nonwoven articles 112. In one example aspect, the extra-stream articles 120 may include non-ware PET-containing articles 136 such as bottles, clamshells, and other containers, whereas the in-stream nonwoven articles 112 may include wares. As used herein, the term "wares" refers to an actual finished product or good such as articles of apparel, bags, upholstery, etc. as opposed to the packaging of the finished product or good. Conversely, the term "non-ware" as used herein refers to articles that are not the finished good or product but that may be associated with the finished good or product or used to create the finished product, such as packaging, displays, and the like. In some aspects, the extra-stream articles 120 may include textiles that are not nonwoven, such as knit textiles and woven textiles. By making use of a variety of different categories of recyclable goods from various sources, aspects of the present disclosure provide additional utilization options for various end-of-life articles by using and reusing materials that may otherwise be discarded in a landfill.

As shown in FIG. 2, the sustainable raw material generation process 118 may include material recycling 137 and material recovery 150. In one aspect of material recycling 137, material (e.g., PET, rPET, TPEE, or rTPEE) included in the in-stream nonwoven articles 112 and/or in the extra-stream articles 120 is re-pelletized 138 such as by transforming the material into chips or pellets (e.g., via shredding, melting, etc.). The pellets or chips may then be transformed into a different form of raw material 114 that is usable to manufacture an article. For example, the re-pelletized polymer may be extruded 140 into fibers 142, which may be cut into staples or used as filaments.

It is further contemplated that additional steps may be executed to affect properties of the fibers. For example, in some instances, a crystallinity modifier (e.g., Isophthalic Acid (IPA)) may be added in various amounts to the polymer when transforming the article into chips or pellets to affect the drawability, clarity, colorability (ability to take on a desired color), and the like. In some examples, the extruded fibers 142 contain a percentage by weight of a crystallinity modifier in a range from about 3% to about 13%, from about 5% to about 10%, or about 5%. In other instances, the polymer extrusion 140 may include a dope-dye process 144 used to add a color to the fiber. As used herein, the term "about" means within ± 5% of an indicated value. In example aspects, the percentage by weight of IPA may be measured using ASTM D2690-98 test standard. For example, this concept is shown in FIG. 2 where the solid-line fiber 146 represents a fiber having a first color and the dashed-line fiber 148 represents a fiber having a second color different from the first color. Based on the controllability of processes included in material recycling 137, extruded fibers 142 typically include a relatively high amount of uniformity within tolerances with respect to certain properties, such as denier and staple length.

In another aspect, the sustainable raw material generation process 118 includes material recovery 150 in which material or raw materials are directly recovered from an article by mechanical separation (e.g., article shredding). For example, an article may be shredded (or otherwise mechanically separated or manipulated) until the materials (e.g., fibers, inks, webs, fiber clumps, etc.) are cardable. As used herein, the term "cardable" refers to a size allowing for the shredded material to be carded. As such, the mechanical separation 152 produces shredded-article fibers 154, which may vary size, length, color, etc. depending on the type and/or style of articles that are mechanically separated or mixed after the fact.

In general, lengths of shredded-article fibers are typically much more variable than extruded fibers. For example, fibers may be randomly and non-uniformly broken during the mechanical separation 152, creating some fibers that are shorter and/or longer than others. Typically, once incorporated into an article, the shredded-article fibers will include an average staple length and a relatively large standard deviation as compared to extruded fibers. For example, the average staple length of shredded-article fibers 154 may range from about 40 mm to about 60 mm, from about 45 mm to about 55 mm, or about 51 mm; and the standard deviation may range from about 5 mm to about 30 mm, from about 5 mm to about 20 mm, or from about 5 mm to about 10 mm. Additionally, in other aspects, shredded-article fibers 154 may include clumps of fibers 158 that were not entirely separated but that were still cardable, as well as combinations of shredded-article fibers 154 with other materials 160 (e.g., inks, silicon, elastomeric materials, etc.). In an additional aspect, shredded-article fibers may have non-uniform fiber ends due to the shredding process. For example, virgin or re-extruded fibers may have fiber ends with a generally planar surface with the surface being generally at a 90 degree angle with respect to the sides of the fibers. By contrast, shredded-article fibers may have fibers ends with non-planar surfaces and/or planar surfaces that are generally at angles greater than or less than 90 degrees with respect to the sides of the fibers.

Shredded-article fibers 154 offer various sustainability advantages. For example, they reuse prior articles that would otherwise be disposed of in landfills. In addition, by omitting certain processes associated with material generation (e.g., re-pelletizing, extrusion, coloring, etc.), the carbon footprint of articles manufactured using shredded-article fibers may be lower.

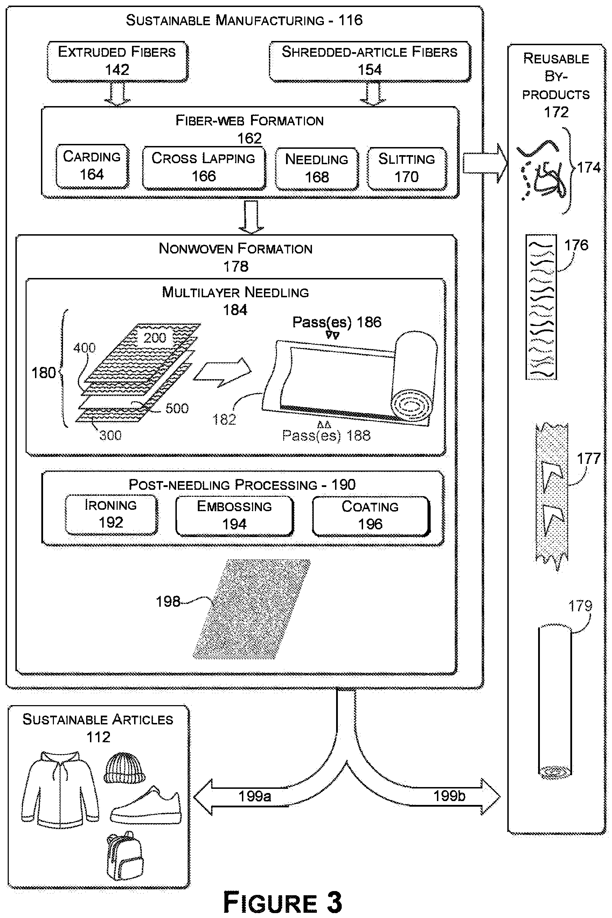

FIG. 3 illustrates the sustainable manufacturing process 116. In one aspect, the extruded fibers 142, the shredded-article fibers 154, or any combination are transformed into fiber webs by fiber-web formation process 162. For example, the fibers 142 and 154 may undergo carding 164, cross lapping 166, needling 168, and slitting 170, among other processes. In some aspects, re-usable by-products 172 are captured from the fiber-web formation process 162 and input back into the system 110, such as into the sustainable raw material generation process 118 and/or the sustainable raw materials 114. One example of re-usable by-products 172 includes loose fibers 174 that enter the fiber-web formation process 162 but fail to sufficiently entangle, and thus, fall out of the fiber web. The loose fibers 174 may be re-introduced into the system at various stages, including the carding 164. In another example, fibers arranged near the edges of a web may not be entangled in a manner that is desirable for incorporation into the nonwoven textile. For example, fibers may have undergone a lower amount of entanglement and/or inconsistent entanglement, etc. As such, a fiber web may undergo slitting 170, in which a margin 176 along each edge of the web is removed. In some instances, the construction of the margin 176 (e.g., amount of entanglement) is such that the margin 176 may be reintroduced at the carding 164 without requiring pre-mechanical separation.

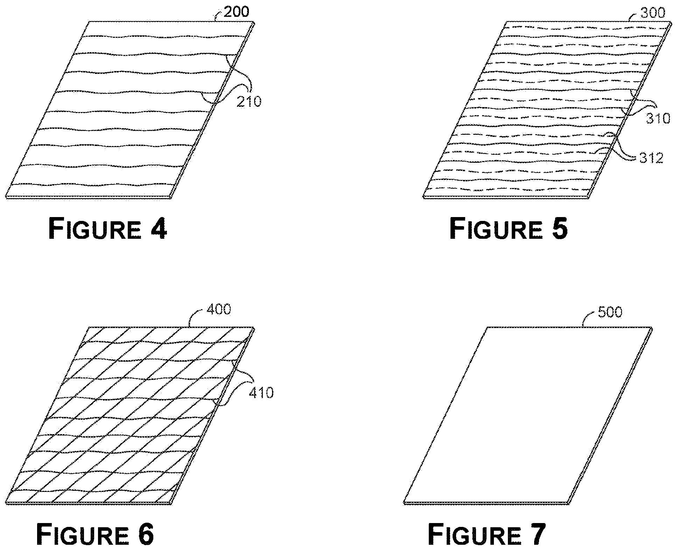

Fiber webs are constructed via the fiber web formation process 162. Fiber webs may have various properties, as desired, and multiple fiber webs (e.g., stack 180) may be combined through entanglement to form a nonwoven textile 198 or composite nonwoven textile. In some aspects, one or more properties of a fiber web are selected or controlled to contribute to the overall properties of the nonwoven textile 198. For example, FIGs. 4, 5, and 6 illustrate different fiber webs 200, 300, and 400, respectively, prior to entangling with other webs, such as when constructed into the nonwoven textile 198 (FIG. 3).

In example aspects, referring to FIG. 4, properties associated with a first fiber web 200 may be selected to achieve desired end properties for the composite nonwoven textile 198. When entangled with other webs, it is contemplated herein that the first fiber web 200 forms a first face of the nonwoven textile 198; and when the nonwoven textile 198 is formed into an article of apparel, it is contemplated herein that the first face forms an outer-facing surface, and in some aspects an outermost-facing surface of the article of apparel. As such, properties associated with the first fiber web 200 include, for example, durability and resistance to abrasion and coverage for modesty. In example aspects, the first fiber web 200 has a basis weight of from about 35 grams per square meter (gsm) to about 150 gsm, from about 35 gsm to about 65 gsm, from about 40 gsm to about 60 gsm, from about 45 gsm to about 55 gsm, or about 50 gsm. As used herein, the term "about" means generally within ± 10% of an indicated value. Targeting a basis weight in this range for the first fiber web 200 provides for a resulting nonwoven textile having a basis weight in a desired range after the first fiber web 200 is combined with other webs and/or elastomeric layers.

The first fiber web 200 is formed of fibers 210, which may be oriented generally in a common direction due to a carding and cross-lapping process. In example aspects, the fibers 210 may include non-coated PET fibers (recycled or virgin) although other virgin and recycled non-coated fiber types are contemplated herein (e.g., polyamide, cotton, and the like). In one example aspect, the fibers 210 may include 100% by weight of non-coated recycled fibers such as 100% by weight of recycled PET fibers. However, in other aspects, the fibers 210 may include 100% by weight virgin fibers, or other combinations of virgin and recycled fibers, as desired. The staple length of the fibers 210 ranges from 40 mm to 60 mm, more particularly it may be from about 45 mm to about 55 mm, or about 51 mm. Use of this fiber length may increase the likelihood that desired entanglement is achieved.

For instance, when below 40 mm, the fibers may not have sufficient length to become entangled, and when above 60 mm, the fibers may actually become un-entangled when the needle is withdrawn from the nonwoven during entanglement. In example aspects, the fibers 210 may comprise a uniform length such as when the fibers are formed from virgin extruded PET or re-extruded PET and cut to a defined length. According to the claimed invention, the fibers 210 include a variation of staple length, e.g. the fibers 210 may be derived from a shredded fiber source.

The fibers 210 may include a denier of greater than or equal to about 1.2 D, or from about 1.2 D to about 3.5 D, from about 1.2 D to about 1.7 D, from about 1.3 D to about 1.6 D, or about 1.5 D. Utilizing a denier within this range makes the fibers 210 less susceptible to breakage which, in turn, enhances the durability and abrasion resistance of the first face of the composite nonwoven textile 198. Moreover, selecting a denier within this range while still achieving the basis weight of the first fiber web 200 provides good, uniform coverage of the first face which helps enhance the durability features of the first face. Selecting a denier of greater than, for instance 3.5 D while still maintaining the basis weight for the first fiber web 200 may not provide uniform coverage for the first face, in an example.

In example aspects, the fibers 210 used to form the first fiber web 200 may include a first color or first color property. The first color property may be imparted to the fibers 210 during, for example, the extrusion process when the fibers 210 are being formed such that the fibers 210 are dope dyed. In one example aspect, the color property may be white although other colors are contemplated herein. Forming the composite nonwoven textile 198 using dope dyed fibers eliminates post-formation dyeing steps which further helps to reduce the carbon footprint of the nonwoven textile 198.

FIG. 5 depicts the second fiber web 300 prior to being entangled with other webs. In example aspects, properties associated with the second fiber web 300 may be selected to achieve desired end properties for the composite nonwoven textile 198. When entangled with other webs, it is contemplated herein that the second fiber web 300 forms an opposite second face of the composite nonwoven textile 198; and when the composite nonwoven textile 198 is formed into an article of apparel, it is contemplated herein that the second face forms an inner-facing surface, and in some aspects an innermost-facing surface of the article of apparel. As such, properties associated with the second fiber web 300 include, for example, a soft hand or feel. In example aspects, the second fiber web 300 has a basis weight of from about 20 gsm to about 150 gsm, from about 35 grams per square meter (gsm) to about 65 gsm, from about 40 gsm to about 60 gsm, from about 45 gsm to about 55 gsm, or about 50 gsm. In example aspects, the second fiber web 300 has generally the same basis weight as the first fiber web 200. Targeting a basis weight in this range for the second fiber web 300 provides for a resulting nonwoven textile having a basis weight in a desired range after the second fiber web 300 is combined with other webs and/or elastomeric layers.

In one aspect, the second fiber web 300 is formed of two types of fibers, such as fibers 310 and fibers 312 that may be oriented generally in a common direction due to a carding and cross-lapping process. In example aspects, the fibers 310 may include non-coated PET fibers (recycled or virgin), although other virgin and recycled non-coated fiber types are contemplated herein (e.g., polyamide, cotton, and the like). In one example aspect, the fibers 310 may include 100% by weight of recycled non-coated fibers such as 100% by weight of recycled non-coated PET fibers. However, in other aspects, the fibers 310 and/or 312 may include 100% by weight virgin fibers, or other combinations of virgin and recycled fibers, as desired.

The fibers 312 are shown in dashed line to indicate that they have different features than the fibers 310. For example, the fibers 312 include silicone-coated fibers. The fibers 312 may be coated with silicone prior to incorporating the fibers 312 into the second fiber web 300. In example aspects, the second fiber web 300 may include about 10% to about 100% by weight of the fibers 312, about 40% by weight of the fibers 310 and about 60% by weight of the fibers 312, about 45% by weight of the fibers 310 and about 55% by weight of the fibers 312, about 50% by weight of the fibers 310 and about 50% by weight of the fibers 312, about 55% by weight of the fibers 310 and about 45% by weight of the fibers 312, or about 60% by weight of the fibers 310 and about 40% by weight of the fibers 312. In one particular aspect, the second fiber web 300 may include about 50% by weight of the fibers 310 and about 50% by weight of the fibers 312. When stating that the second fiber web 300 may include about 100% by weight of the fibers 312, it is contemplated herein that the fibers 312 may be intermittently coated with silicone along their length. Utilizing the fibers 312 in the ranges above provides a good hand feel to the second face formed by the second fiber web 300. It also provides a good drape to the composite nonwoven textile 198. Stated differently, the resulting nonwoven textile 198 is not as stiff as traditional nonwovens used in the cleaning space and the personal hygiene space. Further, utilizing the fibers 310 and the fibers 312 in the ranges above may reduce the amount of needle force needed to entangle the web of fibers described herein since the silicone-coated fibers may move more easily during the entanglement process. When incorporating silicone-coated fibers below the ranges described above, the second face may feel dry and uncomfortable during wear. Conversely, when incorporating silicone-coated fibers above the ranges described above, the second face may feel slick which also may be unpleasant to a wearer. Moreover, using silicone-coated fibers above the ranges described above may make the carding process difficult since the card wires may not be able to frictionally engage with the fibers to achieve a uniform carded web.

Utilizing the silicone-coated fibers 312 may reduce or eliminate the need for adding a silicone finish to the composite nonwoven textile 198 in a post-formation processing step. As known in the textile space, it is common practice to add silicone softener finishes to knitted or woven products in a post-formation processing step. By eliminating this step, the carbon footprint of the composite nonwoven textile 198 is further reduced.

The staple length of each of the fibers 310 and 312 ranges from 40 mm to 60 mm, more particularly it may be from about 45 mm to about 55 mm, or about 51 mm. Similar to the fibers 210, this length may provide for optimal entanglement. According to the claimed invention, the fibers 310 and/or 312 comprise a uniform length, e.g. the fibers may be formed from virgin extruded PET or re-extruded PET and cut to a defined length. In other aspects, the fibers 310 and/or 312 may include a variation of staple length such as when the fibers 310 and/or 312 are derived from a shredded fiber source.

Each of the fibers 310 and 312 may include a denier of less than or equal to about 1 D. For example, the denier may be about 0.1 D, about 0.2 D, about 0.3 D, about 0.4 D, about 0.5 D, about 0.6 D, about 0.7 D, about 0.8 D, or about 0.9 D. In example aspects, the denier of the fibers 310 and 312 may be from about 0.6 D to about 1.0 D, from about 0.7 D to about 0.9 D, or about 0.8 D. Utilizing a denier within this range helps to provide a soft feel or hand to the second face formed from the second fiber web 300. Moreover, selecting a denier within this range while still achieving the basis weight of the second fiber web 300 provides good coverage of the second face.

In example aspects, each of the fibers 310 and 312 used to form the second fiber web 300 may include a color property which may be the same or different. In example aspects, both of the fibers 310 and 312 include the first color property of the fibers 210. Similar to the fibers 210, each of the fibers 310 and 312 may be dope dyed further reducing the need for post-formation dyeing steps for the resulting composite nonwoven textile.

FIG. 6 depicts the third fiber web 400, which may be optional, prior to being entangled with other webs. When incorporated into the composite nonwoven textile 198, it is contemplated herein that the third fiber web 400 is positioned between the first fiber web 200 and the second fiber web 300. In example aspects, properties associated with the third fiber web 400 may be selected to achieve desired end properties for the composite nonwoven textile 198. In example aspects, the third fiber web 400 may be incorporated into the composite nonwoven textile 198 to achieve a desired basis weight for the composite nonwoven textile 198, to achieve a desired thickness for the composite nonwoven textile 198, to achieve a desired insulation property for the composite nonwoven textile 198, and the like. As explained further below, to impart a visual aesthetic to the composite nonwoven textile 198, fibers 410 forming the third fiber web 400 may having a different color property than fibers used to form the first fiber web 200 and the second fiber web 300. Similar to the first fiber web 200 and the second fiber web 300, the third fiber web 400 has a basis weight of from about 20 gsm to about 150 gsm, from about 35 grams per square meter (gsm) to about 65 gsm, from about 40 gsm to about 60 gsm, from about 45 gsm to about 55 gsm, or about 50 gsm. Targeting a basis weight in this range for the third fiber web 400 provides for a resulting nonwoven textile having a basis weight in a desired range after the third fiber web 400 is combined with other webs and/or elastomeric layers.

The third fiber web 400 is formed of fibers, such as fibers 410 that may be oriented generally in a common direction due to a carding and cross-lapping process. In example aspects, the fibers 410 may include non-coated PET fibers (recycled or virgin) although other virgin and recycled non-coated fiber types are contemplated herein (e.g., polyamide, cotton, and the like). In one example aspect, the fibers 410 may include 100% by weight of non-coated recycled fibers such as 100% by weight of recycled non-coated PET fibers. However, in other aspects, the fibers 410 may include 100% by weight virgin fibers, or other combinations of virgin and recycled fibers, as desired. Similar to the fibers 210, 310 and 312, the staple length of the fibers 410 may range from about 40 mm to about 60 mm, from about 45 mm to about 55 mm, or about 51 mm. In example aspects, the fibers 410 may comprise a uniform length such as when the fibers are formed from virgin extruded PET or re-extruded PET and cut to a defined length. In other aspects, the fibers 410 may include a variation of staple length such as when the fibers 410 are derived from a shredded fiber source.

The fibers 410 may include a denier of greater than or equal to about 1.2 D, from about 1.2 D to about 3.5 D, from about 1.3 D to about 1.6 D, or about 1.5 D. Utilizing a denier within this range makes the fibers 410 less susceptible to breakage which, in turn, enhances the durability and abrasion resistance of the composite nonwoven textile 198. Since the third fiber web 400, when used, is positioned between the first fiber web 200 and the second fiber web 300, having a soft hand is not as important as, for example, the second fiber web 200. Selecting a denier within this range while still achieving the basis weight of the third fiber web 400 enhances the overall coverage and/or opacity of the composite nonwoven textile 198.

In example aspects, the fibers 410 used to form the third fiber web 400 may include a second color property different from the first color property. This is depicted in FIG. 4 through the use of diagonal shading lines. It is contemplated herein that the fibers 410 are dope dyed further reducing the carbon footprint of the composite nonwoven textile 198. In other aspects, such as when the fibers 410 are shredded-article fibers, the second color property may result from inks, dyes, or other color agents that had been previously applied to the fiber 410. As will be explained in greater detail below, during the entanglement of the first, second, and third fiber webs 200, 300, and 400, the fibers 410 may be moved more toward the first face than the second face such that the second color property is visually discernible to a greater degree on the first face compared to the second face.

FIG. 7 depicts an elastomeric layer 500, which is not necessarily formed by the fiber-web formation and which may still be combined with or layered among fiber webs. In example aspects, the elastomeric layer 500 may have a basis weight from about 20 gsm to about 150 gsm, from about 50 gsm to about 70 gsm, from about 55 gsm to about 65 gsm, or about 60 gsm. The basis weight of the elastomeric layer 500 may be selected to achieve a desired basis weight for the resulting composite nonwoven textile. Aspects herein contemplate forming the elastomeric layer 500 from a thermoplastic elastomer such as a thermoplastic polyurethane (TPU), a thermoplastic polyether ester elastomer (TPEE), combinations of TPU and TPEE, and the like. The elastomeric layer may include a spunbond layer, a meltblown layer, a film, a web, and the like. In a particular example aspect, the elastomeric layer 500 may comprise a TPEE spunbond layer, and in another particular aspect, the elastomeric layer 500 may comprise a TPU meltblown layer. In general, the elastomeric layer 500 is selected to provide desirable stretch and recovery properties to the composite nonwoven textile 198 while generally maintaining structural integrity during the entanglement process. The elastomeric layer 500 may also be selected to have a low basis weight to maintain a low basis weight for the resulting composite nonwoven textile 198, to be breathable and permeable which contributes to the comfort features of an apparel item formed from the composite nonwoven textile 198, and to be pliable to reduce the stiffness of the composite nonwoven textile 198. It is contemplated herein that the elastomeric layer 500 has a color property. In example aspects, the color property may be the first color property associated with the fibers 210, 310, and 312, although other color properties are contemplated herein.

Referring back to FIG. 3, FIG. 3 depicts the fiber webs 200, 300, and 400 and the elastomeric layer 500 in a stack 180, which may be used to construct the nonwoven textile 198. In an aspect of the present disclosure, the stack 180 of layers (e.g., fiber webs, elastomeric layers, etc.) or a "multilayer" is arranged on a conveyance system 182 that transports the stack 180 during multilayer needling 184. In an aspect of the present disclosure, the stack 180 includes the first fiber web 200, the second fiber web 300, optionally the third fiber web 400, and the elastomeric layer 500. However, a stack may contain any combination of layers with one or more layers added or omitted. As described, each of the fiber webs 200, 300, and 400 has been carded and lapped to achieve a desired basis weight. As well, each of the webs 200, 300, and 400 has been lightly needled to achieve a cohesive structure. Because the fibers in each of the first, second, and third fiber webs 200, 300, and 400 are in a generally loose web state, they are available for movement during the needle entanglement process. In example aspects, the conveyance system 182 may convey the stacked configuration 180 at a rate from about 1.0 m/min to about 3 m/min, from about 2.0 m/min to about 2.5 m/min, from about 2.1 m/min to about 2.4 m/min, or about 2.3 m/min. This rate provides for a needed level of entanglement via needle beds to produce desired end properties of the composite nonwoven textile (e.g., basis weight, thickness, growth and recovery). Slower rates may cause increased entanglement which impacts the desired end properties of the nonwoven textile, and increased rates may cause insufficient entanglement which also impacts the desired end properties of the nonwoven textile 198.

In one aspect, the multilayer needling 184 includes one or more passes across one or more needle boards. The needling may occur from one side of the stack 180 toward the other side of the stack or vice versa. For example, the passes 186 occur from the first fiber web 200 in a direction towards the second and third fiber webs, and the passes 188 occur from the second fiber web 300 and in a direction towards the third and first fiber webs. The needles used in the needle boards of the multilayer needling 184 may be selected to optimally interact with the specific denier of the fibers used in the first, second, and third fiber webs 200, 300, and 400. They also may be selected to include a desired number of barbs to achieve a desired degree of entanglement.

In example aspects, a first pass (e.g., 186) occurs from the first fiber web 200 in a direction toward the second fiber web 300 and functionally has the effect of moving and entangling fibers from the first fiber web 200 into the third fiber web 400 and into the second fiber web 300, and further moving and entangling fibers from the third fiber web 400 into the second fiber web 300. Having the first pass occur in this direction (e.g., as indicated by 186) helps to ensure that the needles are full of fibers from at least the first fiber web 200 before contacting the elastomeric layer 500, which may reduce the likelihood of the needles cutting the elastomeric layer 500 and impacting the resulting growth and recovery properties of the composite nonwoven textile 198.

In example aspects, the first pass may have a stitch density from about 40 n/cm² to about 60 n/cm², from about 45 n/cm² to about 55 n/cm², or about 50 n/cm². The penetration depth for the first pass may be from about 10 mm to about 14 mm, from about 11 mm to about 13 mm, or about 12 mm. A penetration depth of this amount, in example aspects, will generally engage all the barbs of the needles. In one example aspect, all the barbs may comprise five barbs. This penetration depth ensures that the needles pass entirely through the stacked configuration 180, such that fibers in each of the fiber webs 200, 300, and 400 are engaged with the barbs on the needles. Stated differently, having a penetration depth as described for the first pass ensures that at least some of the fibers from the first fiber web 200 are entangled with fibers of the third fiber web 400 and are entangled with the fibers of the second fiber web 200, and at least some of the fibers of the third fiber web 400 are entangled with fibers of the second fiber web 200. In example aspects, there is an inverse relationship between stitch density and penetration depth. This is to avoid overworking the fibers and potentially breaking them. Stated differently, when penetration depth is high, the stitch density is lower to avoid potentially breaking the fibers. After the first pass, the stack 180 may have a decreased thickness due to the z-direction movement and entanglement of the fibers from the different webs.

In another aspect, a second pass, which occurs subsequent to (i.e., temporally after) the first pass, occurs from both sides of the stacked configuration (both 186 and 188) in an alternating manner. Stated differently, the second pass occurs from both the first fiber web 200 toward the second fiber web 300, and from the second fiber web 200 toward the first fiber web 300. Thus, the second pass acts to move the fibers 210 from the first fiber web 200 into the third fiber web 400 and into the second fiber web 300. It also moves the fibers 410 from the third fiber web 400 through the elastomeric layer 500 and into the second fiber web 300. The second pass moves the fibers 310 through the elastomeric layer 500 and into the first fiber web 200.

Needlepunching from the top and bottom in the second pass has a stitch density of from about 40 n/cm² to about 60 n/cm², from about 45 n/cm² to about 55 n/cm², or about 50 n/cm². Keeping the stitch density relatively low helps to prevent overworking of the elastomeric layer 500 and thus helps to maintain the desired growth and recovery properties for the resulting composite nonwoven textile 198. The penetration depth for the second pass is from about 6 mm to about 8 mm. In one example aspect, the penetration depth for the second pass from the direction of 186 is about 6 mm, and the penetration depth from the direction of 188 is about 8 mm. In another example aspect, the penetration depth for the second pass from the direction of 186 is about 8 mm, and the penetration depth from the direction of 188 is about 6 mm. Because the thickness of the stacked configuration 180 during the second pass is already somewhat decreased because of the first pass, the penetration depth is reduced for the second passes. It is contemplated herein that the penetration depth for the second passes is sufficient such that the needle passes completely through the stacked configuration 180. In one example aspect, when the penetration depth is 8 mm, it is contemplated herein that three of the needle barbs are engaged, and when the penetration depth is 6 mm, it is contemplated herein that two of the needle barbs are engaged. After the second passes are complete, the stacked configuration 180 has even further reduced thickness compared to the stacked configuration after the first pass. The end result of the second passes is further entanglement of the fibers of the first fiber web 200, the second fiber web 300, and the third fiber web 400.

In a further aspect, the multilayer needling 184 includes a third pass, which occurs subsequent to (i.e., temporally after) the second passes and occurs in the direction of 188 from the second fiber web 300 toward the first fiber web 200. The stitch density for the third pass is from about 175 n/cm² to about 225 n/cm², from about 180 n/cm² to about 220 n/cm², from about 190 n/cm² to about 210 n/cm², or about 200 n/cm². The higher stitch density of the third pass achieves a more uniform texturing or working of the stacked configuration 180 compared to passes with lower stitch densities such as the first pass and the second passes. The penetration depth for the third pass is from about 1 mm to about 5 mm, from about 2 mm to about 4 mm, or about 3 mm. In example aspects, this engages one barb of the needle. One objective or result of the third pass is to tuck some of the fibers into the stacked configuration 180 that are present on the face of the second fiber web 300 without necessarily creating more entanglement. Stated differently, the third pass helps to reduce the hairiness on the face of the second fiber web 300.

In an additional aspect, the multilayer needling 184 includes a fourth pass, which occurs subsequent to (i.e., temporally after) the third pass and occurs in the direction of 186 from the first fiber web 200 toward the second fiber web 300. Similar to the third pass, the stitch density for the fourth pass is from about 175 n/cm² to about 225 n/cm², from about 180 n/cm² to about 220 n/cm², from about 190 n/cm² to about 210 n/cm², or about 200 n/cm². Also similar to the third pass, the penetration depth for the fourth pass is from about 1 mm to about 5 mm, from about 2 mm to about 4 mm, or about 3 mm. In example aspects, this engages one barb of the needle. The purpose of the fourth pass is to tuck some of the fibers into the stacked configuration that are present on the face of the first fiber web 200 without necessarily creating more entanglement. Stated differently, the fourth pass helps to reduce the hairiness on the face of the first fiber web 200. In total, the stitch density for the composite nonwoven textile 198 is about 550 with an overall stitch density of about 300 on the side formed from the first fiber web 200 and an overall stitch density of about 250 on the side formed from the second fiber web 300.

In an additional aspect of the present disclosure, the multilayer needling 184 may optionally include a Dilour-type process or pass, which may be an addition to the four passes described above or may replace one of the passes (e.g., replace the third pass or the fourth pass). In a Dilour pass, needles having a forked tip are used from the direction of 186 and towards the second fiber web 300. The needles capture fibers and push them into a set of brushes positioned adjacent the second face (outward facing surface of the fiber web 300). As the stacked configuration continues to move in a machine direction, the fibers retained by the set of brushes are pulled off of the brushes. After being pulled off of the set of brushes, the fibers and fiber loops held by the set of brushes have a common orientation in a z-direction with respect to a surface plane of, for example, the second fiber web 300.

After the fourth pass, the entanglement process may be complete, and the nonwoven formation 178 may include additional processes 190 to further enhance the usability and aesthetics. For example, the needlepunched stack may be ironed 192, embossed 194, receive a water-based or oil-based coating 196, or any combination thereof.

The entanglement parameters described above (e.g., needle selection, number of passes, direction of passes, stitch density per pass, and penetration depth) are all selected to achieve desired end properties of the composite nonwoven textile 198. In general, based on the properties selected for each of the first fiber web 200, the second fiber web 300, and the third fiber web 400 (basis weight, fiber denier, staple length, silicone coating, type of fiber, and the like), the properties selected for the elastomeric layer 500 (type of thermoplastic elastomer, construction (film meltblown, spunbond, web, and the like), and selection of the entanglement parameters discussed above, the composite nonwoven textile 198 includes desired properties. For example, the composite nonwoven textile 198 may have a final thickness of from about 1.8 mm to about 2.7 mm, from about 1.9 mm to about 2.6 mm, or from about 2.0 mm to about 2.5 mm. The composite nonwoven textile 198 may have a basis weight from about 40 gsm to about 450 gsm, from about 100 gsm to about 350 gsm, from about 150 gsm to about 190 gsm, or about 180 gsm. The final basis weight may be impacted by the number of layers (fiber webs) used in the construction, fiber loss due to stripping, machine draft, and the like. In example aspects, the composite nonwoven textile 198 may have a thermal resistance from about 50 RCT to about 95 RCT, from about 55 RCT to about 90 RCT, from about 60 RCT to about 85 RCT, or about 65 RCT to about 80 RCT. Thus, as seen, the composite nonwoven textile 198 may exhibit insulation properties associated with typical knit fleeces but have a lower basis weight.

Due to the elastomeric layer 500, the composite nonwoven textile 198 may have minimal growth properties and good recovery properties. Using the ASTMD2594 testing standard, the composite nonwoven textile 198 may have a growth in the length direction (i.e., the machine direction) of less than or equal to about 5%, less than or equal to about 4%, less than or equal to about 3%, less than or equal to about 2%, less than or equal to about 1%, less than or equal to about 0.1%, or less than or equal to 0%. The composite nonwoven textile 198 may have a growth in the width direction (i.e., the cross machine direction) of less than or equal to about 10%, less than or equal to about 9%, less than or equal to about 8%, less than or equal to about 7%, less than or equal to about 6%, less than or equal to about 5%, less than or equal to about 4%, less than or equal to about 3%, less than or equal to about 2%, less than or equal to about 1%, less than or equal to about 0.1%, or less than or equal to 0%. Using the ASTMD2594 testing standard, the composite nonwoven textile 198 may have a recovery of within about 10% of its resting length and width, within about 9% of its resting length and width, within about 8% of its resting length and width, within about 7% of its resting length and width, within about 6% of its resting length and width, within about 5% of its resting length and width, within about 4% of its resting length and width, within about 3% of its resting length and width, within about 2% of its resting length and width, or within about 1% of its resting length and width. The stiffness of the composite nonwoven textile 198, which relates to the drapability of the textile 198, is less than or equal to about 0.4 Kgf, less than or equal to about 0.3 Kgf, less than or equal to about 0.2 Kgf, or less than or equal to about 0.1 Kgf.

The features described above (e.g., basis weight, thickness, thermal resistance, growth and recovery, and stiffness) may, in some example aspects, make the composite nonwoven textile 198 suitable for various articles, as indicated by the arrow 199a. Examples of articles include articles of apparel (e.g., upper-body garments, lower-body garments, hats, and footwear), as well as other finished goods, such as bags, and the like. In particular, the composite nonwoven textile 198 described herein may be suitable for a lightweight, thermal article of apparel suitable for use in cool to cold weather conditions. In some instances, as indicated by arrow 199b, fashioning the sustainable articles 112 may produce some leftover nonwoven textile, such as pieces 177 from which patterns are cut or roll goods 179 that remain unused (e.g., overstock, seconds, defective stock, deadstock, prior-season stock, etc.). In accordance with an aspect of the present disclosure, both the sustainable articles 112 and the pieces 177 and roll goods 179 are fed back into the system 110 for sustainable raw material generation, and since these items include the nonwoven fiber constructions described above, they are well suited for material recycling 137 or material recovery 150.

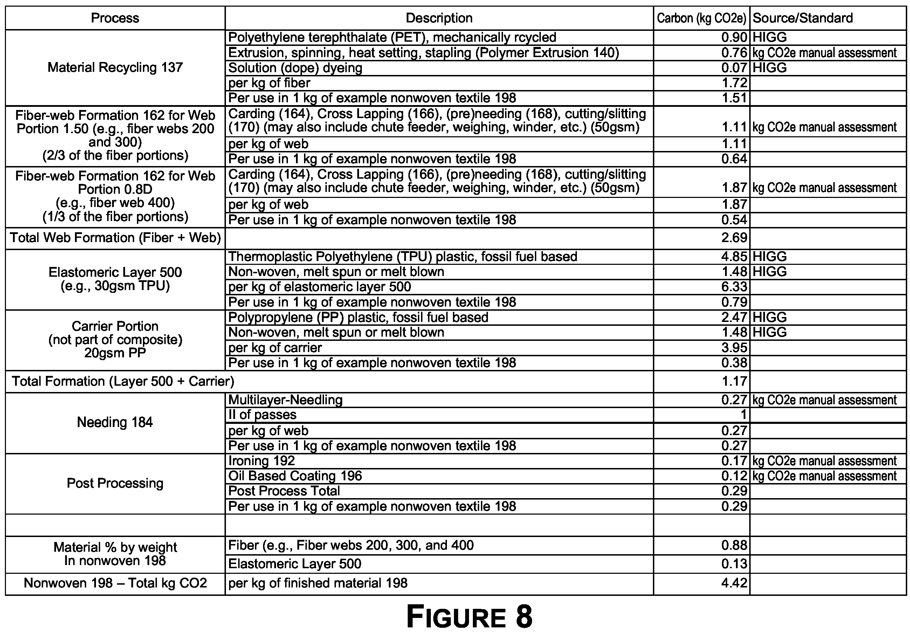

As discussed above, aspects of the present disclosure are related to sustainability and a nonwoven textile having a relatively low carbon footprint based on the energy consumed during production. FIG. 8 includes a listing of parameters (kg CO2e) for stages of the nonwoven formation process 178, in accordance with one aspect of the present disclosure. In addition, FIG. 8 includes example calculations based on an example nonwoven textile 198 comprising the fiber webs 200, 300, and 400 and the elastomeric layer 500. In one aspect, the fiber webs 200, 300, and 400 collectively comprise from about 85% to about 90% by weight of the nonwoven textile, or about 88% by weight of the nonwoven textile, and each of the fiber webs comprises from about 25% to about 35% by weight of the nonwoven textile, or about 29.33% by weight of the nonwoven textile.

In other aspects, the carbon footprint CO2e/kg may vary from that shown in FIG. 8. For example, if material recovery 150 with mechanical separation 152 is used to generate fibers for some or all of the fiber portions (e.g., instead of material recycling with re-pelletization and extrusion), then the carbon value is about 0.42 kg CO2e based on the HIGG Index, which could reduce the carbon footprint. In one instance, the first and second fiber webs 200 and 300 include fibers generated by material recycling, whereas the third fiber web 400 may be formed from fibers generated by material recovery 150, which would reduce the carbon footprint accordingly by adjusting the value associated with material recycling (e.g., 2/3(1.51) for webs 200 and 300 plus 1/3(0.42) for the web 400). It is further contemplated that fibers may be recovered directly from by-products (e.g., 174 and 176) of fiber-web formation process 162, which have a carbon value of essentially zero associated with raw material generation process 118, due to the fact that they can be incorporated directly into carding. In addition, other post-processing steps may be performed, such as embossing, which includes a carbon value of about 0.04 based on kg CO2e manual assessment. Moreover, some post processing steps listed in FIG. 8 may not be performed, such as oil based coating, in which case the carbon footprint would be reduced to about 4.30 CO2e/kg of nonwoven material.

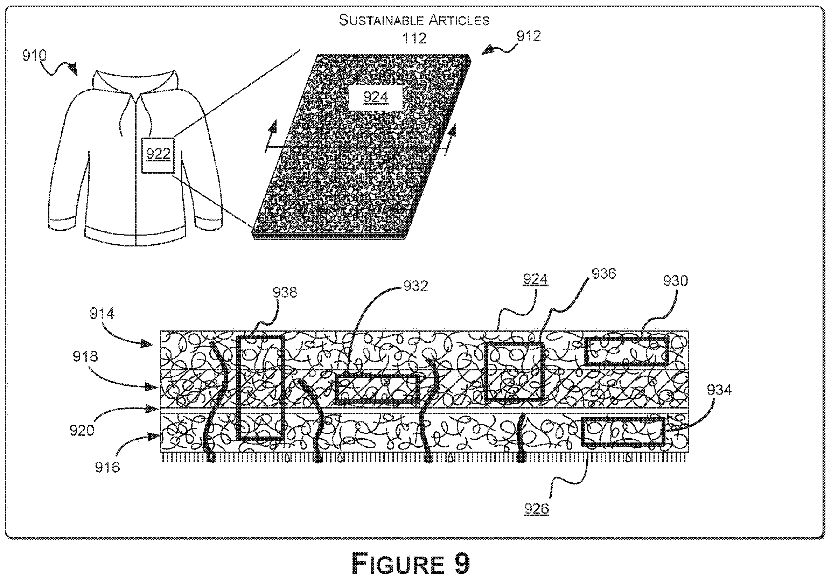

FIG. 9 illustrates additional aspects of an article of apparel 910 comprising a nonwoven textile 912 derived from the sustainable manufacturing process 116. Although FIG. 9 depicts an upper-body garment, one or more aspects described with respect to FIG. 9 may also apply to other articles of apparel (e.g., lower-body garments, footwear, etc.); other nonwoven finished goods; and nonwoven roll goods. FIG. 9 illustrates a cross section of the nonwoven textile 912. This respective cross section represents the nonwoven textile 912 when a Dilour pass is performed during manufacturing. In one aspect, the nonwoven textile 910 may include one or more structures of the composite nonwoven textile 198 described with respect to FIG. 3. For example, the nonwoven textile 912 may include a first entangled fiber web 914, a second entangled fiber web 916, a third entangled fiber web 918, and an elastomeric layer 920. The entangled fiber webs 914, 916, and 918 are delineated and separately identified for explanatory purposes, such as to help understand how they might correspond with the fiber webs 200, 300, and 400 (in an example aspect). As depicted in FIG. 9, these entangled fiber webs may in reality include several fibers that cross two or all three of the webs as a result of the multilayer needling process 184.

The nonwoven textile 912 also includes pluralities of fibers. For example, a first plurality of fibers 930 is identified by a bounding box; a second plurality of fibers 932 is identified by a bounding box; a third plurality of fibers 934 is identified by a bounding box; a fourth plurality of fibers 936 is identified by a bounding box; and a fifth plurality of fibers 938 is identified by a bounding box. A plurality of fibers may be arranged in one of the entangled fiber webs, such as the pluralities 930, 932, and 934. Alternatively, a plurality may be arranged in multiple entangled fiber webs, such as the pluralities 936 and 938.

In accordance with an aspect of the present disclosure, the nonwoven textile 912 may include fibers that were derived or generated (e.g., through sustainable raw material generation process 118) from different categories of recyclable goods. For example, the plurality 930 may have been derived from a first category of recyclable goods (e.g., PET bottles or roll goods), whereas the plurality 934 may have been derived from a second category of recyclable goods (e.g., PET articles of apparel). The pluralities of fibers may have been both generated using the same generation method (e.g., material recycling 137 or material recovery 150), or alternatively, the pluralities may have been generated using different generation methods. For example, the pluralities of fibers 930 and 938 may have both been generated from different categories of recyclable goods using material recycling 137. In a different aspect, the pluralities 936 and 932 may have both been generated using material recovery 150 from different categories of recyclable goods (e.g., knit apparel and nonwoven roll goods). Further still, the plurality 932 may have been generated using material recovery 150, whereas the plurality 934 may have been generated using material recycling 137. In this manner, the article of apparel 910 and the nonwoven textile 912 provide use and reuse opportunities for a variety of different materials and products that might otherwise be disposed of in a landfill.

In FIG. 9, the article of apparel 910 includes an outermost surface or face 922 and an innermost surface or face (not viewable in FIG. 9). In addition, the nonwoven textile 912 includes a first face 924 and a second face 926. Moreover, in accordance with an aspect of this disclosure, the outermost surface 922 comprises the first face 924, and the innermost surface comprises the second face 926. As such, the inclusion of other materials in the article of apparel 910 may be relatively limited. For example, the nonwoven textile 912 may comprise a percentage by weight of the article of apparel 910 in a range from about 50% to about 100%, from about 60% to about 90%, or from about 70% to about 80%. In other aspects, the nonwoven textile 912 may comprise more than 50% by weight of the article of apparel 910, more than 60% by weight of the article of apparel, more than 70% by weight of the article of apparel, more than 80% by weight of the article of apparel, or more than 90% by weight of the article of apparel.

As indicated above, the outermost surface 922 may comprise the first face 924, and as such, the nonwoven textile 912 may contribute visual effects (e.g., color) to the article of apparel 910. For example, in one aspect of the present disclosure, at least some portions of fibers from the entangled fiber web 918 (e.g., may correspond with the fiber web 400) are viewable when observing the first face 924 and contribute to the visual effect. The fibers from the entangled fiber web 918 may be viewable through spaces between fibers in the entangled fiber web 914. In other instances, the viewable portions of fibers from the entangled fiber web 918 may be positioned or arranged (such as resulting from the multilayer needling 184) closer to the first face 924 than to the interface between the entangled fiber webs 914 and 918, and as such, are viewable when observing the first face 924.

In accordance with an aspect of this disclosure, color may be added in select portions of the outermost surface 922 (e.g., all portions of the outermost surface 922) by including a color in the entangled fiber web 918 different from a color in the entangled fiber web 914. For example, in one instance, the entangled fiber web 914 may include extruded fibers that are dope-dyed or that are colored in some other manner with a first color (e.g., white). In addition, the entangled fiber web 918 may include shredded-article fibers that include a second color (e.g., black, grey, red, etc.) different from the first color, the second color arising from the combination of one or more colors included among the shredded-article fibers (e.g., a similar hue with different shades or tints). In this example, using the shredded-article fibers provides the desired aesthetic (e.g., color), while also improving sustainability (e.g., reducing carbon footprint), since generating shredded article fibers (e.g., shredded article fibers 154 using material recovery 150) generally consumes less energy than material recycling 137 (e.g., re-pelletizing 138 and extrusion 140). In addition, if the shredded-article fibers include properties that may be less desirable (e.g., clumps, other materials 160, etc.), the effect of those properties is reduced, minimized, and/or eliminated, since the shredded-article fibers are in the entangled fiber web 918 between the other entangled fiber webs 914 and 916.

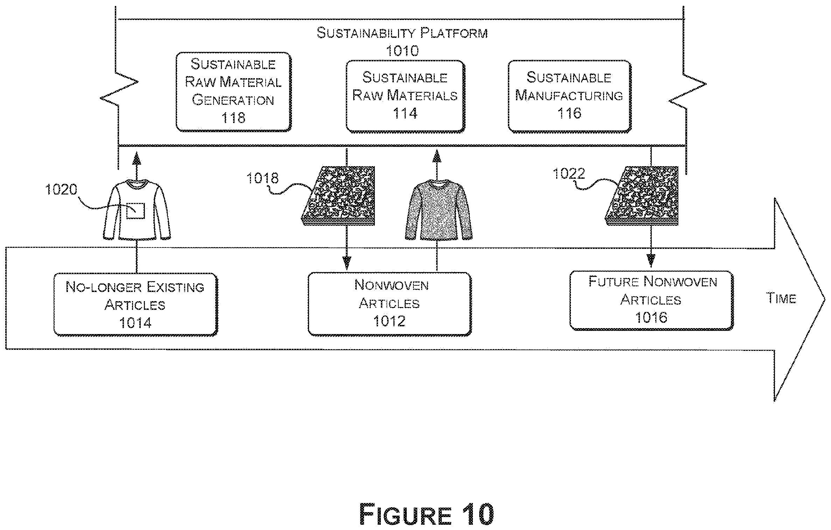

Referring to FIG. 10, FIG. 10 schematically illustrates a perpetual (e.g., near perpetual) system of articles of apparel that leverages a sustainability platform 1010 provided by the system 110. As used in this disclosure, "perpetual system" describes a recurring or cyclical system that re-generates or self-generates at least some inputs without relying on external sources and that is not necessarily limitless or infinite. For example, the sustainability platform includes the sustainable raw material generation process 118, the sustainable raw materials 114, and the sustainable manufacturing process 116 that can continually be used over time to repeatedly recycle nonwoven articles. As such, at any given point in time after the system 110 has used no-longer existing articles 1014 to generate raw materials for making a nonwoven article 1012, there also exists potential future nonwoven articles 1016, which are to be manufactured by generating raw materials from the nonwoven articles 1012. As used herein "no-longer existing articles" describe articles (e.g., 112 and 120) that once existed and that have been input back into the system 110 for sustainable raw material generation process 118 (e.g., after being discarded, traded in, exchanged, or otherwise submitted to the system 110 or collected by the system 110).

Stated differently, the perpetual system includes a first article of apparel (e.g., nonwoven articles 1012) comprising a nonwoven textile (e.g., 1018) constructed of a first set of fibers at least a portion of which were derived from a second set of fibers 1020 previously forming a no-longer existing article of apparel 1014. The first set of fibers are arranged in a first fiber entanglement (e.g., nonwoven), and the second set of fibers 1020 are included in a fiber arrangement (e.g., knit, woven, or nonwoven prior to material recycling or material recovery), which is different from the first fiber entanglement. Moreover, a third set of fibers are derivable from the first set of fibers for arrangement in a second fiber entanglement 1022, which is different from the first fiber entanglement 1018, to construct a second nonwoven article of apparel (e.g., 1016). In some instances, fibers may be re-pelletized in each cycle. In other aspects, fibers may be repeatedly recovered, such that the same set of fibers may be used in multiple generations of articles without being re-pelletized. In this aspect, the repeatedly recovered fibers may be referred to as a common set of fibers. Stated differently, a common set of fibers includes one or more fibers that have been repeatedly used in different articles of apparel including no-longer existing articles of apparel.

## Claims

1. An article of apparel comprising: a nonwoven textile (198) comprising a plurality of fibers, the plurality of fibers having an average staple length ranging from 40 mm to 60 mm and a staple-length standard deviation in a range from 5 mm to 30 mm, wherein the plurality of fibers comprises a first plurality of fibers (210) arranged in a first fiber web (200) and a second plurality of fibers (310, 312) arranged in a second fiber web (300) entangled with the first fiber web (200), wherein the first fiber web (200) forms, at least in part, a first face of the nonwoven textile (198).

2. The article of apparel of claim 1, wherein the first face of the nonwoven textile (198) forms an outermost face of the article of apparel.

3. The article of apparel of claim 1, wherein the first plurality of fibers (210) comprise a first color and wherein fibers of the second plurality of fibers (310, 312) comprise a second color that is different from the first color.

4. The article of apparel of claim 3, wherein the first color is dope-dyed, and/or
wherein the second plurality of fibers (310, 312) comprise a hue and a plurality of shades of the hue, a plurality of tints of the hue, or a combination thereof.

5. The article of apparel of claim 1, wherein the plurality of fibers comprise from about 25% by weight to about 30% by weight of the nonwoven textile (198), wherein optionally the nonwoven textile (198) is at least about 50% by weight of the article of apparel.

6. An article of apparel comprising: a nonwoven textile (198) comprising a first face and an opposite second face; the first face forming an outermost face of the article of apparel; and the second face forming an innermost face of the article of apparel, wherein fibers comprising at least about 50% by weight of the nonwoven textile (198) comprise a first plurality of fibers (210) having an average staple length ranging from 40 mm to 60 mm and a staple-length standard deviation of from 5 mm to 30 mm and a second plurality of fibers (310, 312) having a uniform staple length ranging from 40 mm to 60 mm, and wherein the first plurality of fibers (210) is arranged in a first fiber web (200) and the second plurality of fibers (310, 312) is arranged in a second fiber web (300) entangled with the first fiber web (200).

7. The article of apparel of claim 6, wherein the first plurality of fibers (210) is derived from a shredded fiber source.

8. The article of apparel of claim 7, wherein the second plurality of fibers (310, 312) comprises one or more of virgin extruded polyethylene terephthalate (PET) and re-extruded PET.

9. The article of apparel of claim 8, wherein the second plurality of fibers (310, 312) comprises a first color that is dope-dyed.

10. The article of apparel of claim 9, wherein the first plurality of fibers (210) comprises a second color that is different from the first color, wherein optionally the second color comprises a hue and a plurality of shades of the hue, a plurality of tints of the hue, or a combination thereof.

11. The article of apparel of any one of claims 1 to 10, wherein the article of apparel is any one of: an upper-body garment, a lower-body garment, a hat, a glove, a sleeve, an article of footwear, an upper for a shoe.

12. A method of manufacturing a nonwoven textile (198), the method comprising: forming a first plurality of fibers (210) having an average staple length ranging from 40 mm to 60 mm and a staple-length standard deviation of from 5 mm to 30 mm; forming a second plurality of fibers (310, 312) having a uniform staple length ranging from 40 mm to 60 mm; forming a first fiber web (200) and a second fiber web (300) using the first plurality of fibers (210) and the second plurality of fibers (310, 312); and entangling the first fiber web (200) with the second fiber web (300) to form the nonwoven textile (198).

13. The method of manufacturing the nonwoven textile (198) of claim 12, wherein the first plurality of fibers (210) is formed from article shredding.

14. The method of manufacturing the nonwoven textile (198) of claim 13, wherein the first plurality of fibers (210) includes one or more clumps of fibers and one or more non-fiber materials, wherein optionally the one or more non-fiber materials includes one or more of inks and elastomeric materials.

15. The method of manufacturing the nonwoven textile (198) of claim 12, wherein the second plurality of fibers (310, 312) is formed by re-extruding pelletized polyethylene terephthalate (PET), wherein subsequent to re-extruding the pelletized PET, the extruded fibers are cut to a uniform length to form the second plurality of fibers (310, 312).

## Patentansprüche

1. Bekleidungsstück, aufweisend: ein Vliestextil (198), das eine Vielzahl von Fasern aufweist, wobei die Vielzahl von Fasern eine durchschnittliche Fiberlänge von 40 mm bis 60 mm und eine Standardabweichung der Fiberlänge in einem Bereich von 5 mm bis 30 mm aufweist, wobei die Vielzahl von Fasern eine erste Vielzahl von Fasern (210), die in einer ersten Faserbahn (200) angeordnet sind, und eine zweite Vielzahl von Fasern (310, 312), die in einer zweiten Faserbahn (300) angeordnet sind, die mit der ersten Faserbahn (200) verschlungen ist, aufweist, wobei die erste Faserbahn (200) zumindest teilweise eine erste Seite des Vliestextils (198) bildet.

2. Bekleidungsstück nach Anspruch 1, wobei die erste Seite des Vliestextils (198) eine äußerste Seite des Bekleidungsstücks bildet.

3. Bekleidungsstück nach Anspruch 1, wobei die erste Vielzahl von Fasern (210) eine erste Farbe aufweist und wobei Fasern der zweiten Vielzahl von Fasern (310, 312) eine zweite Farbe aufweisen, die von der ersten Farbe verschieden ist.

4. Bekleidungsstück nach Anspruch 3, wobei die erste Farbe durchgefärbt ist, und/oder
wobei die zweite Vielzahl von Fasern (310, 312) einen Farbton und eine Vielzahl von Schattierungen des Farbtons, eine Vielzahl von Stichen des Farbtons, oder eine Kombination davon umfasst.

5. Bekleidungsstück nach Anspruch 1, wobei die Vielzahl von Fasern etwa 25 Gew.-% bis etwa 30 Gew.-% des Vliestextils (198) aufweisen, wobei optional das Vliestextil (198) zumindest etwa 50 Gew.-% des Bekleidungsstücks beträgt.

6. Bekleidungsstück, aufweisend: ein Vliestextil (198), das eine erste Seite und eine gegenüberliegende zweite Seite aufweist; wobei die erste Seite eine äußerste Seite des Bekleidungsstücks bildet; und die zweite Seite eine innerste Seite des Bekleidungsstücks bildet, wobei Fasern, die zumindest 50 Gew.-% des Vliestextils (198) aufweisen, eine erste Vielzahl von Fasern (210) mit einer durchschnittlichen Fiberlänge von 40 mm bis 60 mm und einer Standardabweichung der Fiberlänge von 5 mm bis 30 mm, sowie eine zweite Vielzahl von Fasern (310, 312) mit einer einheitlichen Fiberlänge von 40 mm bis 60 mm aufweisen, und wobei die erste Vielzahl von Fasern (210) in einer ersten Faserbahn (200) angeordnet ist und die zweite Vielzahl von Fasern (310, 312) in einer zweiten Faserbahn (300) angeordnet ist, die mit der ersten Faserbahn (200) verschlungen ist.

7. Bekleidungsstück nach Anspruch 6, wobei die erste Vielzahl von Fasern (210) aus einer Quelle für zerkleinerte Fasern gewonnen wird.

8. Bekleidungsstück nach Anspruch 7, wobei die zweite Vielzahl von Fasern (310, 312) fabrikneues extrudiertes Polyethylenterephthalat (PET) und/oder re-extrudiertes PET aufweist.

9. Bekleidungsstück nach Anspruch 8, wobei die zweite Vielzahl von Fasern (310, 312) eine erste Farbe aufweist, die durchgefärbt ist.

10. Bekleidungsstück nach Anspruch 9, wobei die erste Vielzahl von Fasern (210) eine zweite Farbe aufweist, die sich von der ersten Farbe unterscheidet, wobei optional die zweite Farbe einen Farbton und eine Vielzahl von Schattierungen des Farbtons, eine Vielzahl von Stichen des Farbtons oder eine Kombination davon aufweist.

11. Bekleidungsstück nach einem der Ansprüche 1 bis 10, wobei das Bekleidungsstück eines der Folgenden ist: Oberbekleidung, Unterbekleidung, Hut, Handschuh, Ärmel, Schuhbekleidungsstück, Obermaterial für einen Schuh.

12. Verfahren zur Herstellung eines Vliestextils (198), wobei das Verfahren umfasst: Bilden einer ersten Vielzahl von Fasern (210) mit einer durchschnittlichen Fiberlänge von 40 mm bis 60 mm und einer Standardabweichung der Fiberlänge von 5 mm bis 30 mm; Bilden einer zweiten Vielzahl von Fasern (310, 312) mit einer einheitlichen Fiberlänge von 40 mm bis 60 mm; und Bilden einer zweiten Vielzahl von Fasern (310, 312) mit einer einheitlichen Fiberlänge von 40 mm bis 60 mm; Bilden einer ersten Faserbahn (200) und einer zweiten Faserbahn (300) unter Verwendung der ersten Vielzahl von Fasern (210) und der zweiten Vielzahl von Fasern (310, 312); Verschlingen der ersten Faserbahn (200) mit der zweiten Faserbahn (300), um das Vliestextil (198) zu bilden.

13. Verfahren zur Herstellung des Vliestextils (198) nach Anspruch 12, wobei die erste Vielzahl von Fasern (210) aus dem Zerkleinern von Gegenständen gebildet wird.

14. Verfahren zur Herstellung des Vliestextils (198) nach Anspruch 13, wobei die erste Vielzahl von Fasern (210) eine oder mehrere Faserflocken und ein oder mehrere nichtfaserige Materialien aufweist, wobei optional das eine oder die mehreren nicht-faserigen Materialien einen Farbstoff und/oder elastomere Materialien aufweisen.

15. Verfahren zur Herstellung des Vliestextils (198) nach Anspruch 12, wobei die zweite Vielzahl von Fasern (310, 312) durch Re-extrusion von pelletiertem Polyethylenterephthalat (PET) gebildet wird, wobei im Anschluss an die Re-extrusion des pelletierten PET die extrudierten Fasern auf eine einheitliche Länge geschnitten werden, um die zweite Vielzahl von Fasern (310, 312) zu bilden.

## Revendications

1. Article d'habillement comprenant : un textile non tissé (198) comprenant une pluralité de fibres, la pluralité de fibres présentant une longueur de fibre moyenne allant de 40 mm à 60 mm et un écart standard de longueur de fibre dans une plage allant de 5 mm à 30 mm, dans lequel la pluralité de fibres comprend une première pluralité de fibres (210) disposées dans un premier voile de fibres (200) et une deuxième pluralité de fibres (310, 312) disposées dans un deuxième voile de fibres (300) enchevêtré avec le premier voile de fibres (200), dans lequel le premier voile de fibres (200) forme, au moins en partie, une première face du textile non tissé (198).

2. Article d'habillement selon la revendication 1, dans lequel la première face du textile non tissé (198) forme une face la plus extérieure de l'article d'habillement.

3. Article d'habillement selon la revendication 1, dans lequel la première pluralité de fibres (210) comprend une première couleur et dans lequel des fibres de la deuxième pluralité de fibres (310, 312) comprennent une deuxième couleur qui est différente de la première couleur.

4. Article d'habillement selon la revendication 3, dans lequel la première couleur est teintée dans la masse, et/ou
dans lequel la deuxième pluralité de fibres (310, 312) comprend une teinte et une pluralité de nuances de la teinte, une pluralité de coloris de la teinte, et une combinaison de ceux-ci.

5. Article d'habillement selon la revendication 1, dans lequel la pluralité de fibres comprennent d'environ 25 % en poids à environ 30 % en poids du textile non tissé (198), dans lequel en option le textile non tissé (198) est au moins d'environ 50 % en poids de l'article d'habillement.

6. Article d'habillement comprenant : un textile non tissé (198) comprenant une première face et une seconde face opposée ; la première face formant une face la plus extérieure de l'article d'habillement ; et la seconde face formant une face la plus intérieure de l'article d'habillement, dans lequel des fibres comprenant au moins 50 % en poids du textile non tissé (198) comprennent une première pluralité de fibres (210) présentant une longueur de fibre moyenne allant de 40 mm à 60 mm et un écart standard de longueur de fibre de 5 mm à 30 mm et une deuxième pluralité de fibres (310, 312) présentant une longueur de fibre uniforme allant de 40 mm à 60 mm, et dans lequel la première pluralité de fibres (210) est disposée sur un premier voile de fibres (200) et la deuxième pluralité de fibres (310, 312) est disposée dans un deuxième voile de fibres (300) enchevêtré avec le premier voile de fibres (200).

7. Article d'habillement selon la revendication 6, dans lequel la première pluralité de fibres (210) est dérivée d'une source de fibres déchiquetées.

8. Article d'habillement selon la revendication 7, dans lequel la deuxième pluralité de fibres (310, 312) comprend un ou plusieurs du polytéréphtalate d'éthylène (PET) extrudé vierge et du PET re-extrudé.

9. Article d'habillement selon la revendication 8, dans lequel la deuxième pluralité de fibres (310, 312) comprend une première couleur qui est teintée dans la masse.

10. Article d'habillement selon la revendication 9, dans lequel la première pluralité de fibres (210) comprend une deuxième couleur qui est différente de la première couleur, dans lequel en option la deuxième couleur comprend une teinte et une pluralité de nuances de la teinte, une pluralité de coloris de la teinte, ou une combinaison de ceux-ci.

11. Article d'habillement selon l'une quelconque des revendications 1 à 10, dans lequel l'article d'habillement est l'un quelconque de : un vêtement pour le haut, un vêtement pour le bas, un chapeau, un gant, une manche, un article chaussant, une tige de chaussure.

12. Procédé de fabrication d'un textile non tissé (198), le procédé comprenant : la formation d'une première pluralité de fibres (210) présentant une longueur de fibre moyenne allant de 40 mm à 60 mm et un écart standard de longueur de fibre allant de 5 mm à 30 mm ; la formation d'une deuxième pluralité de fibres (310, 312) présentant une longueur de fibre uniforme allant de 40 mm à 60 mm ; la formation d'un premier voile de fibres (200) et d'un deuxième voile de fibres (300) en utilisant la première pluralité de fibres (210) et la deuxième pluralité de fibres (310, 312) ; l'enchevêtrement du premier voile de fibres (200) avec le deuxième voile de fibres (300) pour former le textile non tissé (198).

13. Procédé de fabrication du textile non tissé (198) selon la revendication 12, dans lequel la première pluralité de fibres (210) est formée à partir de broyage d'article.

14. Procédé de fabrication du textile non tissé (198) selon la revendication 13, dans lequel la première pluralité de fibres (210) comporte un ou plusieurs flocons de fibres et un ou plusieurs matériaux non fibreux, dans lequel en option les un ou plusieurs matériaux non fibreux comportent une ou plusieurs encres et des matériaux élastomères.

15. Procédé de fabrication du textile non tissé (198) selon la revendication 12, dans lequel la deuxième pluralité de fibres (310, 312) est formée par re-extrusion de polytéréphtalate d'éthylène (PET) transformé en granulés, dans lequel suite à la re-extrusion du PET transformé en granulés, les fibres extrudées sont coupées à une longueur uniforme pour former la deuxième pluralité de fibres (310, 312).
